# NEW EUROPEAN PATENT SPECIFICATION

(11) **EP 1 668 652 B2**
(45) Date of publication and mention of the opposition decision: **21.11.2012**
(45) Mention of the grant of the patent: 31.03.2010
(21) Application number: 04784955.9
(22) Date of filing: 24.09.2004
(51) Int. Cl.: H01B 9/02, H01B 1/24, C08K 3/04

(54) **STRIPPABLE SEMICONDUCTIVE SHIELD AND COMPOSITIONS THEREFOR**
ABLÖSBARE HALBLEITENDE ABSCHIRMUNG UND ZUSAMMENSETZUNGEN DAFÜR
BLINDAGE SEMI-CONDUCTEUR PELABLE ET COMPOSITIONS POUR UN TEL BLINDAGE

(30) Priority: 25.09.2003 US 506097 P
(43) Date of publication of application: 14.06.2006
(73) Proprietor: Dow Global Technologies LLC, Midland, MI 48674 (US)
(72) Inventor: HAN, Suh, Joon, Bell Mead New Jersy 08502 (US); PERSON, Timothy, J., Freehold, NJ 07728 (US); KLIER, John, Midland, MI 48642 (US)
(74) Representative: Hayes, Adrian Chetwynd
(86) International application number: PCT/US2004/031340
(87) International publication number: WO 2005/031761

(56) References cited:
- EP-A- 0 210 425
- EP-A1- 0 129 617
- EP-A1- 0 420 271
- SE-C- 959 368
- US-A- 4 226 823
- US-A- 4 286 023
- US-A- 6 013 202
- US-A1- 2002 032 258
- US-B1- 6 455 771
- US-B2- 6 525 119

## Description

This invention relates to a power cable having semi-conductive shields. This invention is generally directed to semi-conductive power cable shields, cables with such shields, compositions for making such shields, and methods for making such shields.

A typical electric power cable generally comprises one or more electrical conductors in a cable core that is surrounded by several layers of polymeric materials including a first or inner semiconducting shield layer (conductor or strand shield), an insulation layer, a second or outer semiconducting shield layer (insulation shield), a metallic tape or wire shield, and a protective jacket. The outer semiconducting shield can be either bonded to the insulation or strippable, with most applications using strippable shields. The inner semiconducting shield is generally bonded to the insulation layer. Additional layers within this construction such as moisture impervious materials are often incorporated.

Polymeric semiconducting shields have been utilized in multilayered power cable construction for many decades. Generally, they are used to fabricate solid dielectric power cables rated for voltages greater than 1 kilovolt (kV). These shields are used to provide layers of intermediate conductivity between the high potential conductor and the primary insulation, and between the primary insulation and the ground or neutral potential. The volume resistivity of these semiconducting materials is typically in the range of 10⁻¹ to 10⁸ ohm-cm when measured on a completed power cable construction using the methods described in ICEA S-66-524, section 6.12, or IEC 60502-2 (1997), Annex C.

Typical strippable shield compositions contain a polyolefin such as ethylene/vinyl acetate copolymer with a high vinyl acetate content, conductive carbon black, an organic peroxide crosslinking agent, and other conventional additives such as a nitrile rubber (which functions as a strip force reducing agent), processing aids, and antioxidants. These compositions are usually prepared in pellet form. Polyolefin formulations such as these are disclosed in United States Patent Serial No. 4,286,023, European Patent Application Serial No. 420 271, and United States Patent Application Publication 2002032258 A1.

While it is important that the insulation shield adhere to the insulation layer, it is also important that the insulation shield can be stripped with relative ease in a short period of time. It is found that the typical insulation shield does not have optimum strippability with respect to the insulation layer. Strippability is very important in that it is not only time saving, but enhances the quality of the splice or terminal connection.

Current raw materials employed for semiconductive strippable insulation shield (IS) compositions for medium voltage power cables are usually based on a highly, polar polymer blend containing ethylene-vinyl acetate copolymer (EVA) and nitrile butadiene rubber (NBR) or just a high vinyl-acetate (greater than 33 percent vinyl-acetate) EVA copolymer to effect strippability. Strippable insulation shield products include NBR in amounts of 5 to 20 weight percent

However, NBR has been demonstrated to cause significant loss of adhesion between the semiconductive strippable insulation shield and insulation layers when the cable is subjected to thermal aging - a process known as stress relaxation. This loss of adhesion is particularly severe when the insulation material contains low molecular weight species that do not crystallize readily on cooling when the cable is subjected to temperatures above the melting point of the insulation layer, for example, between 100°C and 110°C. Loss of adhesion causes the power cable to fail the customers' specifications and creates commercial problems. Loss of adhesion can be minimized by minimizing the concentration of NBR in the insulation shield. Minimizing NBR, however, will create another problem.

It has been thought that adhesion or strip tension without NBR will be too high to meet customers' requirements on strippability. Generally, in compositions without NBR, the prior art used high amounts of vinyl acetate to provide strippability, but high amounts of vinyl acetate result in residual acetic acid which creates processing problems, equipment corrosion, sintering and high costs as generally discussed in WO-0229829. While some insulation shield compositions are without NBR, such as those described in United States Patent Application Publication No. US 2002/0032258 A1 and United States Patent Serial No. 6,525,119, these compositions are not crosslinkable with free radicals, do not describe highly, short-chained branched polymers, and use high levels of such polymers.

To summarize, three approaches generally have been used in the prior art to achieve acceptable strippability and thermal stability:
i) providing an insulation shield of ethylene/vinyl-acetate copolymer having at least 33 weight percent vinyl acetate and an acrylonitrile/butadiene rubber (NBR) copolymer, which resulted in poor thermal stability;
ii) providing an ethylene/vinyl acetate copolymer having 40 weight percent or greater vinyl acetate, and no NBR, which resulted in poor thermal stability; and
iii) providing an ethylene/etbyl acrylate copolymer insulation shield which resulted in good stability, but poor strippability.

An object of this invention, therefore, is to provide a power cable without NBR and having an insulation layer surrounded by an insulation shield which is appropriately strippable, maintains a satisfactory level of thermal stability, and yields improved processability during cable extrusion. Other objects and advantages will become apparent with reference to the following specification.

The free radical crosslinkable semiconductive power cable shield composition of the present invention is a blend which is crosslinkable through free radical crosslinking. The blend comprises (a) at least one highly, short-chained branched polymers which is a homopolymer of one or more olefins or an interpolymer of ethylene and one or more olefins. (b) at least one unsaturated ester interpolymer of ethylene and an unsaturated ester selected from the group consisting of vinyl esters, acrylic acid esters, methacrylic acid esters and mixtures thereof wherein the ester monomer is present in an amount of 15 to a 50 weight percent based upon the weight of the unsaturated ester interpolymer, and (c) conductive carbon black. The highly, shortchained branched polymer, the unsaturated ester interpolymer, and conductive carbon black should be in amounts which will provide the insulation shield with a strip force of greater than 1-4 kg (3 pounds) per 1-3cm (half inch) at 23°C after being stored at 100°C for 2 weeks when cured and an initial strip force of not greater than 10-9 kg (24 pounds) per 1-3cm (half inch) at 23°C.

While not intending to be bound by theory, it has been discovered that relatively low amounts of highly, short-chained branched polymers reduce the wetting and diffusion of polymers from the insulation shield into the insulation which generally comprises polyethylene. The short chained branched polymers minimize molecular entanglement at the interface between the insulation shield and insulation. This effect is a result of immiscibility between polymer chains when the solubility parameter difference is greater than 0.3 (J/cm³)^{½} (Mw = 100,000 g/mol) based on Flory-Huggins theory for the described system.

During free radical crosslinking of the insulation shield composition via thermal means, such as with free radicals formed from a peroxide, the free radicals preferentially react with tertiary hydrogen atoms on short-chained branched polymers. It is believed that this causes β-scission reactions on the short-chained branched polymers which consume free radicals which could otherwise cause bonding at the interface between the insulation and insulation shield layers.

The highly, short-chained branched polymer is a homopolymer of one or more olefins or an interpolymer of ethylene and one or more olefins. (That is, the highly, short-chained branched polymer may contain up to 100 mole percent of olefin or may be an olefin homopolymer.) Preferably, the olefin is an α-olefin. The highly, short-chain branched polymers useful in the present invention also include (1) polymers of olefins and ethylene or (2) random copolymers.

The olefin monomer which is polymerized with ethylene or is copolymerized with another olefin can have 3 to 12 carbon atoms, and preferably has 3 to 8 carbon atoms, ranging from 50 to 100 percent by mole of the copolymer. Preferably, the ethylene/olefin copolymer is an ethylene/α-olefin copolymer of 1-butene and ethylene, a copolymer of propylene and ethylene, or a copolymer of 1-octene and ethylene.

Also, the highly, short-chained branched polymers are described by the formula:

(CH₂-CHR)ₓ-(CH₂-CH₂)_{Y}

where
X **=** mole percent of olefins comprising from 50 to 100 percent;
Y = mole percent of from 0 to 50 percent;
X + Y = 100 (total mole percent); and
R is a short-chain branch which is selected from alkyl groups containing 1 to 12 carbon atoms (for example, methyl, ethyl, butyl, hexyl group from propylene, 1-butene, 1-hexene, 1-octene), where the number of short-chain branches in the polymer ranges 250 to 500 per 1000 polymer backbone carbons.

Preferably, the highly, short-chained branched ethylene/olefin interpolymer contains 50 to 100 mole percent olefin.

The ethylene comonomer insertion in olefin/ethylene copolymer disrupts the crystallinity of the polymer, allowing the polymer to be soft and more flexible. For example, the melting point of polybutene is about 125°C. As the ethylene content (Y) increases slightly, the melting temperature decreases. The melting point of polypropylene, which is about 165°C, follows the same trend.

**Effect of Ethylene Comonomer Insertion in Polybutene/Ethylene Copolymer**

| Composition | X=1 | X=0.96, Y=0.04* | X=0.94, Y=0.06* |
|---|---|---|---|
| Melting temperature, °C | 125 | 116 | 94 |
| Density, g/cm³ | 0.915 | 0.908 | 0.895 |

| | | | |
|---|---|---|---|
| * Mole fraction. | | | |

**Effect of Ethylene comonomer Insertion in Polypropylene/Ethylene Copolymer**

| Composition | X=1 | X=0.92, Y=0.08* | X=0.96, Y=0.04* | X=0.94, Y=0.06* |
|---|---|---|---|---|
| Melting temperature, °C | 165 | 104 | 68 | 54 |
| Density, g/cm³ | 093 | 0.88 | 0.874 | 0.865 |

| | | | | |
|---|---|---|---|---|
| * Mole fraction. | | | | |

One or more types of olefin monomers may be used to make the polymer a copolymer or an interpolymer having three or more monomers. Preferred the olefin is an α-olefin including propylene, 1-butene, 1-hexene, 4-methyl-1-pentene, and 1-octene. The melt index can be in the range of 1 to 100 grams per 10 minutes at 190°C/2.16kg, and are preferably in the range of 20 to 50 grams per 10 minutes.

The highly, short-chained branched polymers are generally present in an amount of from 1 to 75 weight percent based upon the weight of the highly, short-chain branched polymer, the unsaturated ester interpolymer, and the conductive carbon black in the insulation shield composition. Preferably, the highly, short-chained branched polymers are present in an amount from 1 to 40 weight percent, more preferably, in an amount from 1 to 20 weight percent When the highly, short-chained branched polymer is a propylene copolymer, the highly, short-chained branched polymer is particularly well-suited to be present in an amount between 1 to 75 weight percent, and more preferably between 20 weight percent and 40 weight percent.

The chemical microstructures of the highly short-chain branched polymer can be determined by the NMR technique reported by Bovey, F.A., "High Resolution NMR of Macromolecule," Academic Press, New York, 1972 and by Randall, J.C., "Polymer Sequence Determination," Academic Press, New York, 1977.

Typically, the extent of short chain branching is indicated by the melting temperature of the polymer. The melting point can be expected to decrease as the percent of ethylene increases and branching decreases. For example, at levels from 5 to 15 weight percent ethylene, the melting temperature can decrease in excess of 40 °C. Generally, the melting point of the highly, short-chained branched polymers should be in the range of from 20°C to 115°C as measured by a heating rate of 10-20°C /minutes in DSC (Differential Scanning Calorimetry). As described above, the highly, short-chained branched polymers typically also have a backbone substituted by alkyl groups with 250 to 500 short-chain branches per 1000 carbons.

The highly branched, short-chained polymers useful in subject invention are preferably produced in the gas phase. They can be produced by high pressure or low pressure processes. Low pressure processes are typically run at pressures below 7 MPa (1000 psi) whereas, as noted above, high pressure processes are typically run at pressures 105 MPa (15,000 psi). They also can be produced in a solution process. Propyleneethylene copolymers are preferably produced using a solution process.

The unsaturated ester polymer is an interpolymer. As used herein, an "interpolymer" means a copolymer , a terpolymer or a higher order polymer. That is, at least one other comonomer is polymerized with ethylene to produce the interpolymer.

Generally, the unsaturated ester interpolymer has a melt index of 1 to 100 grams per 10 minutes, and preferably has a melt index in the range of 20 to 50 grams per 10 minutes. Melt index is determined under ASTM D-1238, Condition E, at 190°C /2.16 kilograms.

The unsaturated ester interpolymers are generally present in an amount of 40 to 75 weight percent based upon the weight of the highly, short-chain branched polymer, the unsaturated ester interpolymer, and the conductive carbon black in the insulation shield composition.

The unsaturated ester interpolymers most commonly used in semiconducting shields are elastomers of varying degrees of crystallinity from amorphous through low and medium crystallinity, preferably copolymers of ethylene and unsaturated esters. In so far as the insulation shield of this invention is concerned, the unsaturated ester is a vinyl ester, an acrylic acid ester, or a methacrylic acid ester. Preferably, the unsaturated ester interpolymer has an ester content of 15 to 50 weight percent based on weight of the interpolymer, and the interpolymer forms 40 to 75 weight percent of the unsaturated ester interpolymer, highly, short-chained branched polymer and carbon black blend.

The ester monomer can have 4 to 20 carbon atoms, and preferably has 4 to 7 carbon atoms. Examples of vinyl esters are vinyl acetate, vinyl proprionate, vinyl butyrate, vinyl pivalate, vinyl neononanoate, vinyl neodecanoate, and vinyl 2-ethylhexanoate. Vinyl acetate is preferred.

Examples of acrylic and methacrylic acid esters are lauryl methacrylate; myristyl methacrylate; palmityl methacrylate; stearyl methacrylate; 3-methacryloxypropyltrimethoxysilane; 3-methacryloxypropyltriethoxysilane; cyclohexyl methacrylate; n-hexylmethacrylate; isodecyl methacrylate; 2-methoxyethyl methacrylate; tetrahydrofurfuryl methacrylate; octyl methacrylate; 2-phenoxyethyl methacrylate; isobornyl methacrylate; isooctylmethacrylate; octyl methacrylate; isooctyl methacrylate; oleyl methacrylate; ethyl acrylate; methyl acrylate; t-butyl acrylate; n-butyl acrylate; and 2-ethylhexyl acrylate. Methyl acrylate, ethyl acrylate, and n- or t-butyl acrylate are preferred.

In the case of alkyl acrylates and methacrylates, the alkyl group can have 1 to 8 carbon atoms, and preferably has 1 to 4 carbon atoms. The alkyl group can be substituted with an oxyalkyltrialkioxysilane, for example, or other various groups.

The unsaturated ester interpolymers are usually made by conventional high pressure processes. These high pressure processes are typically run at pressures above 105 MPa (15,000 psi) (pounds per square inch). The interpolymers can have a density in the range of 0.900 to 0.990 gram per cubic centimeter, and preferably have a density in the range of 0.920 to 0.970 gram per cubic centimeter.

Without intending to be bound by any theory, the blend of the highly branched short chained polymer and the unsaturated ester interpolymer may be defined using thermodynamic miscibility of polyolefins. A solubility parameter of polyolefins may be estimated to predict melt miscibility.

On the basis of Flory-Huggins theory (Hildebrand, JH. and Scott, R. L., The Solubility of Nonelectrolytes, 3rd Ed., Dover Publications, Incl, New York, 431,1950, and Van Krevelen, D. W., Properties of Polymers. Elsevier/North-Holland Inc., 2nd Ed., 168, 1980) a polymer pair will be immiscible when the solubility parameter difference between the polymer pair is greater than approximately 0.3 (J/cm³)^{½} (at M_{w} = 100,000g/mol). The immiscible pairs may be predicted from a solubility parameter map of polyolefins.

A polymer composition having a solubility parameter difference greater than about 0.5 (J/cm³)^{½} with low density polyethylene (LDPE-density of less than about 0.92g/cm³) insulation is likely an immiscible region in the melt state. A poly(α-olefin) with α-olefin monomers, ranging in content of 50 to 100 weight percent is predicted to not be miscible with LDPE. A of ethylene/unsaturated ester copolymer and highly blanched short chained polymer, according to the Floury-Huggins calculation model, may be immiscible with the insulation shield composition and also be immiscible with the polyethylene insulation. As the two polymers become less compatible, the polymer chains at an interface will less likely mix with unlike polymer chains. Due to the inability to minx, the chains move as far away as possible from each other in the melt, thus leading to decreased interface thickness and lowered interfacial entanglements.

In order to provide a semiconducting shield, it also is necessary to incorporate conductive particle into the composition. These conductive particles are generally provided by particulate carbon black, which is referred to above.

Useful carbon blacks can have a surface area of 20 to 1000 square meters per gram. The surface area is determined under ASTM D 4820-93a (Multipoint B.E.T. Nitrogen Absorption).

The carbon black can be used in the semiconducting shield composition in an amount of 25 to 45 percent by weight, and is preferably used in an amount of 30 to 40 percent by weight; based upon the weight of the unsaturated ester interpolymer, the highly-branched, short-chained branched polymer and the conductive carbon black.

More preferably, the loading range is between 34 to 38 weight percent conductive carbon black (typically having a dibutyl phthalate (DBP) absorption value of carbon black under ASTM D 2414 of 105 cubic centimeters/ 100 grams). Both standard conductivity and high conductivity carbon blacks can be used with standard conductivity blacks being preferred. Examples of conductive carbon blacks are the grades described by ASTM N550, N472, N351, N110, acetylene black, and Ketgen black.

The polymers in the insulation shield composition which are used to make the insulation shield are crosslinked. This is accomplished in a conventional manner with a free radical crosslinking reaction initiated by an organic peroxide, or irradiation, the former being preferred. The amount of organic peroxide used can be in the range of 0.2 to 5 percent by weight of organic peroxide based on the weight of the peroxide, unsaturated ester interpolymer, highly, short-chained branched polymer and carbon black, and is preferably in the range of 0.4 to 2 parts by weight. Organic peroxide crosslinking temperatures, as defined by a one-minute half-life for the peroxide decomposition, can be in the range of 150 to 250°C and are preferably in the range of 170 to 210°C.

Examples of organic peroxides useful in crosslinking are dicumyl peroxide; lauryl peroxide; benzoyl peroxide; tertiary butyl perbenzoate; di(tertiary-butyl) peroxide; cumene hydroperoxide; 2,5-dimethyl-2,5-di(t-butyl-peroxy)hexyne-3; 2,5-di-methyl-2,5-di(t-butyl-peroxy)hexane; tertiary butyl hydroperoxide; isopropyl percarbonate; and alpha, alpha'-bis(tertiary-butylperoxy)diisopropylbenzene.

Another component, which may be, but is not desirable in the insulation shields is a copolymer of acrylonitrile and butadiene (NBR). To enjoy the advantages of the invention, NBR may be present in the copolymer in an amount of less than 5 percent by weight, preferably less than 1 weight percent and, in an important aspect not more than trace amounts of NBR should be present NBR which is a nitrile rubber or an acrylonitnie/butadiene copolymer rubber can have a density, for example, 0.98 gram per cubic centimeter and the Mooney viscosity measured at 100 °C can be (ML 1+4) 50. As used herein, acrylonitrile/butadiene rubber includes both nitrile rubber and an acrylonitrile/butadiene rubber.

Conventional additives, which can be introduced into the composition, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Additives and fillers can be added in amounts ranging from less than 0.1 to more than 10 percent by weight based on the weight of the layer in which it is included.

Examples of antioxidants are: hindered phenols such as tetrakis[methylene(3,5-di-tert-butyl-4-hydroxyhydro-cinnamate)]methane, bis[(beta-3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol),and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite, thio compounds such as dilaurylthiodipropionate, dimyristylthiodipropionate, and distearylthiodipropionate; various siloxanes; and various amines such as polymerized 2,2,4-trimethyl-1,2-dihydroquinoline, 4,4'-bis(alpha,alpha-dimethylbenzyl)diphenylamine, and alkylated diphenylamines. Antioxidants can be used in amounts of 0.1 to 5 percent by weight based on the weight of the layer in which it is included.

The cable of the invention comprises an electrical conductor or a core of electrical conductors surrounded by an insulation layer and which insulation layer is surrounded by and contiguous with an insulation shield layer which comprises the insulation shield composition which has been free radically crosslinked. The insulation layer can include any resin which is appropriate for power cable insulation, but common insulation layers comprise polyethylene, ethylene/propylene copolymer rubber, ethylene/ propylene/diene terpolymer rubber, and mixtures thereof.

The polyethylene used in the insulation for the power cable of the invention can be a homopolymer of ethylene or a copolymer of ethylene and an olefin. The polyethylene can have a high, medium, or low density. Thus, the density can range from 0.860 to 0.960 grams per cubic centimeter. The olefin can have 3 to 12 carbon atoms, and preferably has 3 to 8 carbon atoms. Preferred olefins are α-olefins that can be exemplified by propylene, 1-butene, 1-hexene, 4-methyl-1-pentene, and 1-octene:
The melt index can be in the range of 1 to 20 grams per 10 minutes, and is preferably in the range of 2 to 8 grams per 10 minutes.

The ethylene polymers useful in subject invention are preferably produced in the gas phase. They can also be produced in the liquid phase in solutions or slurries by conventional techniques. They can be produced by high pressure or low pressure processes. Low pressure processes are typically run at pressures below 7 MPa (1000 psi) whereas, as noted above, high pressure processes are typically run at pressure above 105 MPa (15,000 psi.) Generally, the ethylene homopolymer is prepared by a high pressure process and the copolymers by low pressure processes. Typical catalyst systems, which can be used to prepare these polymers are magnesium/titanium based catalyst systems, which can be exemplified by the catalyst system described in United States patent 4,302,565; vanadium based catalyst systems such as those described in United States patents 4,508,842 and 5,332,793; 5,342,907; and 5,410,003; a chromium based catalyst system such as mat described in United States patent 4,101,445; a metallocene catalyst system such as that described in United States patents 4,937,299 and 5,317,036; or other transition metal catalyst systems. Many of these catalyst systems are often referred to as Ziegler-Natta or Phillips catalyst system. Catalyst systems, which use chromium or molybdenum oxides on silica-alumina supports, are also useful. Typical processes for preparing the polymers are also described in the aforementioned patents. Typical in situ polymer, blends and processes and catalyst systems for providing same are described in United States patents 5,371,145 and 5,405,901. A conventional high pressure process is described in Introduction to Polymer Chemistry, Stille, Wiley and Sons, New York, 1962, pages 149-151. A typical catalyst for high pressure processes is an organic peroxide. The processes can be carried out in a tubular reactor or a stirred autoclave.

Examples of the polyethylene are the homopolymer of ethylene (HP-LDPE), linear low density polyethylene (LLDPE), and very low density polyethylene (VLDPE). Medium and high density polyethylenes can also be used. The homopolymer of ethylene is generally made by a conventional high pressure process. It preferably has a density in the range of 0.910 to 0.930 gram per cubic centimeter. The Homopolymer can also have a melt index in the range of 1 to 5 grams per 10 minutes, and preferably has a melt index ins the range of 0.75 to 3 grams per 10 minutes. The LLDPE can have a density in the range of 0.916 to 0.925 gram per cubic centimeter. The melt index can be in the range of 1 to 20 grams per 10 minutes, and is preferably in the range of 3 to 8 grams per 10 minutes. The density of the VLDPE, which is also linear, can be in the range of 0.860 to 0.915 gram per cubic centimeter. The melt index of the VLDPE can be in the range of 0.1 to 20 grams per 10 minutes and is preferably in the range of 0.3 to 5 grams per 10 minutes. The portion of the LLDPE and the VLDPE attributed to the comonomer(s), other than ethylene, can be in the range of 1 to 49 percent by weight based on the weight of the copolymer and is preferably in the range of 15 to 40 percent by weight. A third comonomer can be included, for example, another α-olefin or a diene such as ethylidene norbornene, butadiene, 1,4-hexadiene, or a dicyclopentadiene. The third comonomer can be present in an amount of 1 to 15 percent by weight based on the weight of the copolymer and is preferably present in an amount of 1 to 10 percent by weight. It is preferred that the copolymers contain two or three comonomers inclusive of ethylene.

In addition to the polyethylene described above, another resin which may be used in the insulation is an EPR (ethylene/propylene rubber), which includes both the ethylene/propylene copolymer (EPM) and an ethylene/propylene/ diene terpolymer (EPDM). These rubbers have a density in the range of 1.25 to 1.45 grams per cubic centimeter and a Mooney viscosity (ML 1+4) at 125°C in the range of 10 to 40. The propylene is present in the copolymer or terpolymer in an amount of 10 to 50 percent by weight, and the diene is present in an amount of 0 to 12 percent by weight. Examples of dienes used in the terpolymer are hexadiene, dicyclopentadiene, and ethylidene norbornene. Mixtures of polyethylene and EPR are contemplated.

The invention also improves the manufacturing of the insulation shield, the composition therefor and cable extrusion processability. NBR is a sticky rubber. It is very difficult to convey in the material transport line in a manufacturing operation. NBR has a high viscosity so that the formulation viscosity is drastically increased by the addition of NBR. In contrast the highly, short-chained branched polymers are easy to transport for mass production of the insulation shield and composition therefor. Insulation shield compositions with highly, short-chained polymers dramatically improve processability in comparison to formulations which include NBR due to their lower viscosity as compared to the viscosity of NBR This translates to faster cable extrusion and ease of manufacturing.

Preferably, the semiconductive insulation shield composition is prepared by reactively compounded the components.

### EXAMPLES

The following examples illustrate methods for carrying out the invention and should be understood to be illustrative of, but not Hunting upon, the scope of the invention which is defined in the appended claim.

### Sample Preparation

The vulcanizable semiconductive shield composition can be prepared in various types of melt mixers such as Brabender™ mixer, Banbury™ mixer, a roll mill, a Buss™ co-kneader, a biaxial screw-kneading extruder, and a single or twinscrew extruders.

The vulcanizable semiconductive compositions prepared in a Brabender bench mixer at a prescribed temperature of 150°C for 15 minutes at 40 rpm and used for plaque adhesion tests.

The vulcanizable semiconductive compositions were prepared in a Buss™ cokneader for cable extrusion. The 15kV cables were extruded with triple layers onto the #1/0-19W stranded aluminum conductor wire. The target dimensions for the cable were 0·4mm/4·4mm/1·0mm (0.015 inch/0.175 inch/0.040 inch) for the conductor shield/insulation/insulation shield.

The conductor was preheated at 454°C (850 °F). The conductor temperature was 33-34°C (92-94 °F) , before extrusion with the conductor shield, followed by extrusion of insulation and insulation shields.

The surface of conductor shield was visually inspected during the cable extrusion. The cables were crosslinked under the hot nitrogen condition with a pressure of 1·02MPa (145 psi) as soon as the cables were exiting from the extruders. The line length of the continuous vulcanization (CV) tube was about 36·6m (120 feet). The cable residence time in the CV tube was about 4 minutes. The overall line speed was 9 meters/minute (30 feet/minute).

The HFDE-4201 insulation resulted in the hot creep percentage of 133 percent and 102 percent AEIC CS8-87 specification for hot creep is below 175 percent for crosslinked polyethylene insulation.

### Test Method for Plaque Adhesion

Single plaques are prepared from insulation shield formulation pellets and insulation layer formulation pellets by compression molding.

Prior to compression molding, the pellets are mated on a two roll mill. An organic peroxide is added if crosslinking is desired. The temperature for compression molding of shield pellets is 100°C. Approximately 65 grams of shield formulation are used to prepare 762 µm (30 mil) plaque.

The temperature for compression molding of insulation pellets is 130°C. Approximately 135 grams of insulation formulation are used to prepare a 3175 µm (125 mil) plaque. The weighed material is sandwiched between two Mylar^{™} plastic sheets and is separated from the press platens by sheets of aluminum foil.

The following typical pressures and time cycles were used for the compression molding: a) 14MPa (2000 psi) ((pounds per square inch)) for 5 minutes; b) 350 MPa (50,000 psi) for 3 minutes; then c) quench cooling pressure of 22680 kg (50,000 pounds) for 10 minutes.

An adhesion plaque sandwich is then made by curing two single plaques under pressure (one shield plaque and one insulation plaque). The Mylar^{™} sheets are removed from the single plaques and any excess is trimmed. The 3175 µm (125 mil) trimmed insulation plaque is placed in a 1905µm (75 mil) mold. At least 5cm (2 inches) on the top edge of the insulation plaque is covered with a strip of Mylar^{™} sheet to prevent adhesion to the shield plaque in a region that will form a "pull-tab." The 762µm (30 mil) shield plaque is then placed on top of the insulation plaque. The sandwich is separated from the press platens by Mylar^{™} sheets, and placed in the press. The press is then closed and a pressure of 7MPa (1000 psi) is maintained for 4 minutes at 130 degrees C. Then steam is introduced into the press at 190°C (about 1-26 MPa gauge (180 psig). A cure cycle of 140MPa (20,000 psi) for 25 minutes (including the time to heat up from 130°C to 190°C) is then effected followed by a quench cooling cycle of 140MPa (20,000 psi) for 15 minutes.

The sandwich is removed from the press, the Mylar^{™} sheets are removed, the excess is trimmed, and the sandwich is cut into five samples (each 3·8cm (1.5 inches) wide by about 15·2cm (6 inches) long). These samples are placed in a climate controlled room at 23 °C and 50 percent relative humidity overnight before any further testing.

A 1·3cm (one-half inch) strip is marked in the center of each sample. A razor is used to cut along each line so that the black material is cut all the way through to the insulation plaque. A stripping test is achieved with the use of a rotating wheel and an Instron^{™} or similar tensile apparatus. Each sample is mounted to the wheel with the center strip mounted in the jaws of the tensile machine in such a manner that the tensile machine will pull the center strip from the sandwich plaque, while the wheel will rotate to maintain the perpendicular configuration of the surface of the plaque to the direction of tensile force. The jaws of the tensile machine shall travel at a linear speed of 50·8cm (20 inches) per minute during the test, and should be stopped when about 1·3cm (one-half inch) of unpeeled material remains. The Maximum Load and Minimum Load are to be reported from the test, while disregarding the first and last 2·54cm (inch) stripped. The plaque strip force is equal to the Maximum Load, reported in pounds per one-half inch.

### Test Method for Cable Strip Tension

From the cable, two parallel cuts were made down toward the insulation with a 1·3cm (0.5 inch) separation with a scoring tool designed to remove the insulation shield in strips parallel to the cable axis. The scoring tool was set a depth not to exceed 26·4cm (1 mil) less than the specified minimum point thickness of insulation shield. To achieve the required test temperature, the samples were conditioned in a compartment at the required temperature. The strip tension force, reported in pounds per one-half inch, was measured with an Instron™ as the same procedure in the plaque adhesion test.

### Examples 1-2, 4-6 and Comparative Examples 3 and 7

The concentration of raw materials for Examples 1, 2, 4-6, and Comparative Examples 3 and 7 is listed in weight percent in Tables 1 and 2.

The ethylene/vinylacetate copolymer has a melt index of 30 grams/10 minutes, a density of 0.95 grams per cubic centimeter, contains 33 weight percent vinyl acetate and is commercially available from DuPont. The butene copolymer has a melt index of 45 grams/10 minutes, a density of 0.89 grams per cubic centimeter, and is commercially available from Basell Corporation.

The propylene copolymer has a melt flow rate of 25 grams/10 minutes, a density of 0.87 grams per cubic centimeter, and is commercially available from The Dow Chemical Company. The nitrile butadiene rubber (NBR) has a density of 0.98 grams per cubic centimeter and is commercially available from Zeon Chemicals.

The poly(1-butene) copolymers contained 94 weight percent 1-butene and 6 weight percent ethylene comonomer. The polypropylene copolymer contained 92 weight percent propylene and 8 weight percent ethylene comonomer.

The insulation substrates include HFDE-4201 crosslinkable polyethylene insulation and HFDB-4202 water tree-retardant crosslinkable polyethylene insulation. Both insulations have a density of 0.92 grams per cubic centimeter and are commercially available from The Dow Chemical Company.

### Examples 1 and 2 and Comparative Example 3

Examples 1 and 2 and Comparative Example 3 illustrate the invention on cables.

The strippable force necessary to remove the new insulation shield with EVA/butene copolymer from the HFDE-4201 insulation in the cables was measured at 23°C, -10°C, and -25°C. The strippable force necessary to remove the new insulation shield with EVA/polybutene copolymer from the HFDB-4202 insulation in the cables was measured at 23°C.

The evaluated materials were exposed to thermal cyclic aging conditions at 100 °C for 2 weeks (8 hours heating/16 hours cooling).

All strippable shields from the cables met the AEIC strip force requirement.
However, the insulation shields with EVA/butene copolymer showed less strip force reduction from the initial strip force after thermal cyclic heating at 100°C for 2 weeks (8 hours heating / 16 hours cooling), indicating a stable strip performance.

As observed in Examples 1 and 2, between 74 - 87 percent of the original strippable force has been retained after aging for 2 weeks at 100°C, whereas, in Comparative Example 3 (containing 10 percent NBR) only 50 percent of the strippable force was retained.

The insulation shield formulations yielded improved processability during cable extrusion. A reduced head pressure and melt temperature were observed during cable extrusion with the copolymer of ethylene/1-butene and EVA.

The head pressure during extrusion of the examples containing the polybutene copolymer resulted in a 20-30 percent reduction in head pressure under the same experimental parameters as compared to the Comparative example. The Comparative Example 3 (containing NBR) demonstrated a higher melt viscosity, which resulted in a higher formulation viscosity.

**Table 1**

| **Raw Materials** | **Ex. 1** | **Ex. 2** | **Comp. Ex. 3** |
|---|---|---|---|
| EVA Copolymer¹ | 58.5 | 56.5 | 50.8 |
| Butene Copolymer² | 2.0 | 2.0 | |
| Propylene Copolymer³ | | 0 | 0 |
| NBR⁴ | 0 | 0 | 0 |
| Processing Aids⁵ | 2.0 | 2.0 | 1.0 |
| Antioxidant⁶ | 0.8 | 0.8 | 0.8 |
| Carbon Black⁷ | 35.6 | 37.6 | 35.6 |
| Organic Peroxide⁸ | 1.1 | 1.1 | 0.7 |

| **Properties** | | | |
|---|---|---|---|
| Strippable force @ 23°C to insulation⁹ | 11.3 | 11.6 | 11.8 |
| Strippable force @ -10°C to insulation⁹ | 12 | 12.8 | 10.5 |
| Strippable force @ -25C to insulation⁹ | 10.1 | 9.8 | 9.6 |
| Strippable force @ 100°C/2 weeks¹⁰ | 8.4 | 10.1 | 5.9 |
| Extruder head pressure, MPa (psi) | 27.58 (3940) | 30.28 (4325) | 37.95 (5422) |
| Melt temperature, ((°F) degrees Celsius), | 104 (220) | 106 (222) | 110 (230) |

| | | | |
|---|---|---|---|
| ¹ 33 weight percent vinyl acetate, 30 melt index ² 6 weight percent ethylene, 45 melt index, density=0.89 g/cm³ ³ 8 weight percent ethylene, density=0.87 g/cm³ ⁴ nitrile butadiene rubber ⁵ processing aid from Akzo-Nobel ⁶ 4,4'-bis(α,α'-dimethylbenzyl)diphenylamine, commercially available from Uniroyal Chemical ⁷ conductive furnace carbon black with dibutyl phthalate adsorption (106 cm³/100g), iodine absorption (43mg/g), commercially available from Columbian Chemical ⁸ α,α'-bis(term-butylperoxy)-diisopropyl benzene mixture, commercially available from GEO Specialty Chemicals ⁹ HFDE-4201, a crosslinkable polyethylene insulation having a density of 0.92g/cm³ ¹⁰ HFDB-4202, a water tree-retardant crosslinkable polyethylene insulation having a density of 0.92 g/cm³) | | | |

### Examples 4 - 6 and Comparative Example 7

Examples 4-6 and Comparative Example 7 further illustrate the invention on laboratory plaques.

**Table 2**

| **Raw Materials** | **Ex.4** | **Ex.5** | **Ex.6** | **Comp. Ex.7** |
|---|---|---|---|---|
| EVA Copolymer | 51.6 | 55.5 | 55.5 | 50.6 |
| Butene Copolymer | 7.9 | 4.0 | 0 | 0 |
| Propylene Copolymer | 0 | 0 | 4.0 | 0 |
| NBR | 0 | 0 | 0 | 9.9 |
| Processing Aids | 1.0 | 1.0 | 2.0 | 2.0 |
| Antioxidant | 0.8 | 0.8 | 0.8 | 0.8 |
| Carbon Black | 37.6 | 37.6 | 35.6 | 35.6 |
| Organic Peroxide | 1.1 | 1.1 | 1.1 | 1.1 |
| Strippable force @ 23°C to insulation^{9, 10} | 3.8¹⁰ | 3.9¹⁰ | 5.3⁹ | 12.5¹⁰ |

| | | | | |
|---|---|---|---|---|
| ⁹ HFDE-4201, a crosslinkable polyethylene insulation having a density of 0.92g/cm³ ¹⁰ HFDB-4202, a water tree-retardant crosslinkable polyethylene insulation having a density of 0.92 g/cm³) | | | | |

### Examples 8 - 13 and Comparative Examples 14 and 15

In this set of exemplified compositions, the compounding temperature is sufficiently high to thermally degrade the peroxide during the residence time in the compounder. The antioxidant is added late in the batch cycle or downstream in a continuous compounder. Additional peroxide was soaked into the pelletized compounds.

Two propylene copolymers were evaluated in the exemplified formulations, Examples 8 - 13. Propylene Copolymer 1 was a 9 percent ethylene/propylene random copolymer having a melt flow rate of 2 grams per 10 minutes. Propylene Copolymer 2 was a 12 percent ethylene/propylene random copolymer having a melt flow rate of 25 grams per 10 minutes. Both propylene copolymers had a peak melting point of about 80 degrees Celsius.

The insulation substrate used was HFDB-4202 water tree-retardant crosslinkable polyethylene insulation, commercially available from The Dow Chemical Company. Three organic peroxides were used. Organic peroxide 1 was Triganox 101™ 2,5-dimethyl-2,5-di-(t-butylperoxyl)hexane, commercially available from Akzo Nobel. Organic Peroxide 2 was an 80:20 blend of bis(t-butylperoxyl)diisopropyl benzene and t-butyl cumyl peroxide, commercially available from GEO Specialty Chemicals. Organic Peroxide 3 was Lupersol 130™ 2,5-dimethyl-2,5-di-(t-butylperoxyl)hexyne, commercially available from Elf Atochem.

The exemplified formulations were co-extruded over the HFDB-4202 insulation and were subsequently cured in a dry-nitrogen continuous vulcanization process. The insulation shield material from a 30·5cm (12-inch) long cable core was scored axially to define a strip one-half inch wide.

A 90-degree peel test is achieved with an Instron^{™} tensile apparatus. The jaws of the tensile machine traveled at a linear speed of 50·8cm (20 inches) per minute during the test. The maximum tensile force was determined and reported as cable strip tension.

Insulation shield material was also removed from the insulation to generate tensile specimens for a "Hot Creep" test (as described in AEIC and ICEA/NEMA Standards). A tensile stress of 0.2 MPa was applied to the tensile specimens in a 150 degrees Celsius circulating air oven for 15 minutes. The samples were marked with lines 2·54cm (one-inch) apart prior to the application of the load, and the percent change in separation of the marks after the test was reported as the Hot Creep Elongation. The unrecoverable deformation was reported as the Hot Set.

The Relaxed Cable Strip Tension, reported in Rg (pounds) per 1·3cm (one-half inch), was measured following aging the exemplified materials for 4 hours at 110 degrees Celsius. This measured values correlate to longer duration relaxation measurements, namely, those measurements determined after exposure to 100 degrees Celsius for 2 weeks.

**Table 3**

| **Component** | **Ex. 8** | **Ex. 9** | **Ex. 10** | **Ex.11** | **Ex. 12** | **Ex. 13** | **C. Ex. 14** | **C. Ex. 15** |
|---|---|---|---|---|---|---|---|---|
| EVA Copolymer | 41.9 | 42.3 | 43.1 | 43.1 | 39.6 | 39.6 | 51.2 | 51.2 |
| Propylene Copolymer 1 | 22.2 | 22.2 | | | | | | |
| Propylene Copolymer 2 | | | 20 | 20 | 20 | 20 | | |
| NBR | | | | | | | 10 | 10 |
| Carbon Black | 36.5 | 36.5 | 36.5 | 36.5 | 40 | 40 | 36 | 36 |
| Processing Aids | | | | | | | 2 | 2 |
| Antioxidant | 0.4 | | 0.4 | 0.4 | 0.4 | 0.4 | 0.8 | 0.8 |
| Organic Peroxide 1^{a} | 0.2 | 0.2 | 0.2 | | 0.2 | | | |
| Organic Peroxide 2^{b} | | | 0.49 | 0.49 | 0.49 | 0.49 | 0.65 | |
| Organic Peroxide 3^{b} | 0.4 | | | | | | | |

| **Properties** | | | | | | | | |
|---|---|---|---|---|---|---|---|---|
| Cable Strip Tension | 6-9 | 3-5 | 4 - 6 | 5-7 | 2-4 | 4-6 | 15 - 17 | 11-14 |
| Hot Creep Elongation | 54 | | 36 | 46 | 33 | 36 | 26 | |
| Hot Set | -3 | | 0 | 3 | 5 | 2 | -3 | |
| Relaxed Cable Strip Tension | 3 | | 4 | 9 | 4 | 7 | 13 | 6 |

| | | | | | | | | |
|---|---|---|---|---|---|---|---|---|
| ^{a} organic peroxide was added/reacted in the compounder ^{b} organic peroxide was soaked into compounded pellets | | | | | | | | |

All exemplified formulations of the present invention showed a reduced level of cable strip tension as compared to Comparative Example 14. The adhesions were lower than can be achieved through the use of uncured and rubber-containing insulation shield formulation as represented by Comparative Example 15.

The amount of deformation and the amount of unrecoverable deformation for the examples of the present invention are sufficient to meet industry standards for a strippable insulation shield application.

### Reactively Compounded - Examples 16 - 19

Examples 16 - 19 compare compositions according to the present invention as prepared via reactive compounding methods and physical blending methods. All samples were evaluated with HFDB-4202 water tree-retardant crosslinkable polyethylene insulation, commercially available from The Dow Chemical Company, as the insulation substrate.

The plaques were prepared and the plaque adhesion values were measured according to the description set forth in the section entitled "Test Method for Plaque Adhesion."

Two propylene copolymers were evaluated in the exemplified formulations, Examples 16 - 19. Propylene Copolymer 3 was a 12 percent ethylene/propylene random copolymer having a melt flow rate of 2 grams per 10 minutes, which was used in Examples 16 and 17. Propylene Copolymer 4 was a 12 percent ethylene/propylene random copolymer having a melt flow rate of 25 grams per 10 minutes which was used in Examples 18 and 19. Both propylene copolymers had a peak melting point of about 80 degrees Celsius. Each formulation contained the EVA/propylene copolymer in a ratio 2:1 and 36.5 weight percent of conductive carbon black.

The reactively compounded contained 0.2 weight percent of Triganox 101™ 2,5-dimethyl-2,5-di-(t-butylperoxyl)hexane, commercially available from Akzo Nobel. The Triganox 101™ was reacted during the compounding process.

For each formulation (the reactively-compounded formulation and the physically-blended formulation), a 0.40 weight percent amount of an organic peroxide (that is, Organic Peroxide 2 or Organic Peroxide 3) was soaked into the formulated composition. That is, for the reactively-compounded formulation, the Triganox 101 was reacted first during the compounding step, and then the additional organic peroxide was soaked into the compounded formulation.

Organic Peroxide 2 was an 80:20 blend of bis(t-butylperoxyl)diisopropyl benzene and t-butyl cumyl peroxide, commercially available from GEO Specialty Chemicals. Organic Peroxide 3 was Lupersol 130™ 2,5-dimethyl-2,5-di-(t-butylperoxyl)hexyne, commercially available from Elf Atochem.

**Table 4**

| **Peroxide** | **Ex. 16** | **Ex. 17** | **Ex. 18** | **Ex. 19** |
|---|---|---|---|---|
| **Strippable Force** | | | | |
| Organic Peroxide 2 | 6.2 | 13.4 | 2.9 | 9.2 |
| Organic Peroxide 3 | 7.0 | bonded | 3.2 | bonded |

Numerous modifications and variations in practice of the invention are expected to occur to those skilled in the art upon consideration of the foregoing detailed description of the invention. Consequently, such modifications and variations are intended to be included within the scope of the following claims.

## Claims

1. An insulation shield composition which is a blend and is effective for being crosslinked through a free radical polymerization reaction, the composition blend comprising:
(a) at least one highly, short-chained branched polymer which is an olefin homopolymer or an interpolymer of ethylene and one or more olefins having the formula
-(CH₂-CHR)ₓ-(CH₂-CH₂-)_{y}
wherein
R is a short chain branch alkyl group containing 1 to 12 carbon atoms,
x and y are mole percents,
x = 50 - 100,
y = 0 - 50, and
x + y = 100,
and has a backbone substituted with 250 to 500 short chain branches per 1000 carbons;
(b) at least one unsaturated ester interpolymer which is a polymer of ethylene and at least one unsaturated ester, the unsaturated ester being selected from the group consisting of vinyl esters, acrylic acid esters, methacrylic acid esters, and mixtures thereof wherein the ester monomer is present in an amount of 15 to 50 weight percent based upon the weight of the unsaturated ester interpolymers; and
(c) conductive carbon black,
wherein the highly, short-chained branched polymer, unsaturated ester interpolymer and conductive carbon black being in amounts will provide the insulation shield made from the insulation shield composition with a strip force of greater than 1.4kg (3 pounds) per 1.3cm (half inch) at 23°C after being stored at 100°C for 2 weeks when cured and an initial strip force of not greater than 10.9kg (24 pounds) per 1.3cm (half inch) at 23°C.

2. The insulation shield composition of claim 1, wherein the highly, short-chained branched polymer has a melting point of from 20°C to 120°C as measured by differential scanning calorimetry.

3. The insulation shield composition of claim 1 or 2, wherein the insulation shield composition comprises
(a) from 1 to 75 weight percent highly, short-chained branched polymer;
(b) from 40 to 75 weight percent unsaturated ester interpolymer; and
(c) from 25 to 45 weight percent carbon black.

4. The insulation shield compositions of claim 3, wherein the highly, short-chained branched polymer is present in an amount from 1 to 40 weight percent.

5. The insulation shield composition of claim 3, wherein the highly, short-chained branched polymer is present in an amount from 1 to 20 weight percent.

6. The insulation shield composition of claim 3, wherein the highly, short-chained branched polymer is a poly (α-olefin) copolymer.

7. The insulation shield compositions of claim 1, wherein the highly, short-chained branched polymer is a propylene/ethylene copolymer.

8. The insulation shield composition of claims 1, 3 or 6, wherein the unsaturated ester interpolymer is a polymer of ethylene and a vinyl ester.

9. The insulation shield composition of claim 1, wherein the at least one highly, short-chained branched polymer is present in an amount not more than 20 weight percent.

10. The insulation shield composition of claim 9, wherein the insulation shield composition comprises not more than 1 weight percent of an acrylonitrile/butadiene rubber.

11. The insulation shield composition of claim 1, wherein the conductive carbon black is present in an amount of at least 25 weight percent based on the weight of the highly, short-chained branched polymer, the unsaturated ester interpolymer and the conductive carbon black.

12. An electric power cable comprising a conductor, an insulation layer, and an insulation shield made from an insulation shield composition which is a blend, comprising:
(a) at least one highly, short-chained branched polymer which is an olefin homopolymer or an interpolymer of ethylene and one or more olefins having the formula
-(CH₂-CHR)ₓ-(CH₂-CH₂-)_{y}
wherein
R is a short chain branch alkyl group containing 1 to 12 carbon atoms,
x and y are mole percents,
x = 50 - 100,
y = 0 - 50, and
x + y = 100,
and has a backbone substituted with 250 to 500 short chain branches per 1000 carbons;
(b) at least one unsaturated ester interpolymer which is a polymer of ethylene and at least one unsaturated ester, the unsaturated ester being selected from the group consisting of vinyl esters, acrylic acid esters, methacrylic acid esters, and mixtures thereof wherein the ester monomer is present in an amount of 15 to 50 weight percent based upon the weight of the unsaturated ester interpolymer; and
(c) at least 25 weight percent conductive carbon black, based on the weight of the highly, short-chained branched polymer, the unsaturated ester interpolymer and the conductive carbon black,
wherein the highly, short-chained branched polymer, unsaturated ester interpolymer and conductive carbon black being in amounts which will provide the insulation shield made from the insulation shield composition with a strip force of greater than 1.4kg (3 pounds) per 1.3cm (half inch) at 23°C after being stored at 100°C for 2 weeks when cured and an initial strip force of not greater than 10.9kg (24 pounds) per 1.3cm (half inch) at 23°C.

13. A method for making an insulation shield comprising free radically crosslinking an insulation shield composition which is a blend comprising compounding:
(a) at least one highly, short-chained branched polymer which is an olefin homopolymer or an interpolymer of ethylene and one or more olefins having the formula
-(CH₂-CHR)ₓ-(CH₂-CH₂-)_{y}
wherein
R is a short chain branch alkyl group containing 1 to 12 carbon atoms,
x and y are mole percents,
x = 50 - 100,
y = 0 - 50, and
x + y = 100,
and has a backbone substituted with 250 to 500 short chain branches per 1000 carbons;
(b) at least one unsaturated ester interpolymer which is a polymer of ethylene and at least one unsaturated ester, the unsaturated ester being selected from the group consisting of vinyl esters, acrylic acid esters, methacrylic acid esters, and mixtures thereof wherein the ester monomer is present in an amount of 15 to 50 weight percent based upon the weight of the unsaturated ester interpolymer; and
(c) at least 25 weight percent conductive carbon black, based on the weight of the highly, short-chained branched polymer, the unsaturated ester interpolymer and the conductive carbon black,
wherein the highly, short-chained branched polymer, unsaturated ester interpolymer and conductive carbon black being in amounts which will provide the insulation shield made from the insulation shield composition with a strip force of greater than 1.4kg (3 pounds) per 1.3cm (half inch) at 23°C after being stored at 100°C for 2 weeks when cured and an initial strip force of not greater than 10.9kg (24 pounds) per 1.3cm (half inch) at 23°C.

14. The method for making an insulation shield of claim 13, wherein the insulation shield composition is reactively compounded.

## Patentansprüche

1. Isolationsabschirmungszusammensetzung, die eine Mischung darstellt und durch eine radikalische Polymerisationsreaktion vernetzt werden kann, wobei die Mischung der Zusammensetzung Folgendes umfasst:
(a) mindestens ein stark verzweigtes kurzkettiges Polymer, das ein Olefin-Homopolymer oder ein Interpolymer von Ethylen und einem oder mehreren Olefinen ist mit der Formel
-(CH₂-CHR)ₓ-(CH₂-CH₂-)_{y}
worin
R eine kurzkettige Alkylzweiggruppe ist, die 1 bis 12 Kohlenstoffatome enthält,
x und y Molprozent sind,
x = 50 - 100,
y = 0 - 50, und
x + y = 100,
und eine mit 250 bis 500 kurzkettigen Zweigen pro 1000 Kohlenstoffen substituierte Hauptkette hat;
(b) mindestens ein ungesättigtes Esterinterpolymer, das ein Polymer von Ethylen und mindestens einem ungesättigten Ester ist, wobei der ungesättigte Ester aus der aus Vinylestern, Acrylsäureestern, Methacrylsäureestern und Mischungen davon bestehenden Gruppe ausgewählt ist, wobei das Estermonomer in einer Menge von 15 bis 50 Gew.-% vorliegt, bezogen auf das Gewicht der ungesättigten Esterinterpolymere; und
(c) elektrisch leitenden Ruß,
wobei das stark verzweigte kurzkettige Polymer, das ungesättigte Esterinterpolymer und der elektrisch leitende Ruß in Mengen vorliegen, die der aus der Isolationsabschirmungszusammensetzung hergestellten Isolationsabschirmung nach 2-wöchiger Lagerung bei 100°C im gehärteten Zustand eine Ablösekraft größer als 1,4 kg (3 lbs.) pro 1,3 cm (0,5 Inch) bei 23°C sowie eine anfängliche Ablösekraft nicht größer als 10,9 kg (24 lbs.) pro 1,3 cm (0,5 Inch) bei 23°C verleihen.

2. Isolationsabschirmungszusammensetzung nach Anspruch 1, wobei das stark verzweigte kurzkettige Polymer einen Schmelzpunkt von 20°C bis 120°C hat, gemessen durch Differentialscanningkalorimetrie.

3. Isolationsabschirmungszusammensetzung nach Anspruch 1 oder 2, wobei die Isolationsabschirmungszusammensetzung Folgendes umfasst:
(a) von 1 bis 75 Gew.-% stark verzweigtes kurzkettiges Polymer;
(b) von 40 bis 75 Gew.-% ungesättigtes Esterinterpolymer; und
(c) von 25 bis 45 Gew.-% Ruß.

4. Isolationsabschirmungszusammensetzung nach Anspruch 3, wobei das stark verzweigte kurzkettige Polymer in einer Menge von 1 bis 40 Gew.-% vorliegt.

5. Isolationsabschirmungszusammensetzung nach Anspruch 3, wobei das stark verzweigte kurzkettige Polymer in einer Menge von 1 bis 20 Gew.-% vorliegt.

6. Isolationsabschirmungszusammensetzung nach Anspruch 3, wobei das stark verzweigte kurzkettige Polymer ein Poly(α-Olefin)-Copolymer ist.

7. Isolationsabschirmungszusammensetzung nach Anspruch 1, wobei das stark verzweigte kurzkettige Polymer ein Propylen/Ethylen-Copolymer ist.

8. Isolationsabschirmungszusammensetzung nach Anspruch 1, 3 oder 6, wobei das ungesättigte Esterinterpolymer ein Polymer von Ethylen und einem Vinylester ist.

9. Isolationsabschirmungszusammensetzung nach Anspruch 1, wobei das mindestens eine stark verzweigte kurzkettige Polymer in einer Menge von nicht mehr als 20 Gew.-% vorliegt.

10. Isolationsabschirmungszusammensetzung nach Anspruch 9, wobei die Isolationsabschirmungszusammensetzung nicht mehr als 1 Gew.-% eines Acrylnitril/Butadien-Kautschuks umfasst.

11. Isolationsabschirmungszusammensetzung nach Anspruch 1, wobei der elektrisch leitende Ruß in einer Menge von mindestens 25 Gew.-% vorliegt, bezogen auf das Gewicht des stark verzweigten kurzkettigen Polymers, des ungesättigten Esterinterpolymers und des elektrisch leitenden Rußes.

12. Stromkabel mit einem Leiter, einer Isolierschicht und einer Isolationsabschirmung aus einer Isolationsabschirmungszusammensetzung, die eine Mischung darstellt, die Folgendes umfasst:
(a) mindestens ein stark verzweigtes kurzkettiges Polymer, das ein Olefin-Homopolymer oder ein Interpolymer von Ethylen und einem oder mehreren Olefinen ist mit der Formel
-(CH₂-CHR)ₓ-(CH₂-CH₂-)_{y}
worin
R eine kurzkettige Alkylzweiggruppe ist, die 1 bis 12 Kohlenstoffatome enthält,
x und y Molprozent sind,
x = 50 - 100,
y = 0 - 50, und
x+y=100,
und eine mit 250 bis 500 kurzkettigen Zweigen pro 1000 Kohlenstoffen substituierte Hauptkette hat;
(b) mindestens ein ungesättigtes Esterinterpolymer, das ein Polymer von Ethylen und mindestens einem ungesättigten Ester ist, wobei der ungesättigte Ester aus der aus Vinylestern, Acrylsäureestern, Methacrylsäureestern und Mischungen davon bestehenden Gruppe ausgewählt ist, wobei das Estermonomer in einer Menge von 15 bis 50 Gew.-% vorliegt, bezogen auf das Gewicht des ungesättigten Esterinterpolymers; und
(c) mindestens 25 Gew.-% elektrisch leitenden Ruß, bezogen auf das Gewicht des stark verzweigten kurzkettigen Polymers, des ungesättigten Esterinterpolymers und des elektrisch leitenden Rußes,
wobei das stark verzweigte kurzkettige Polymer, das ungesättigte Esterinterpolymer und der elektrisch leitende Ruß in Mengen vorliegen, die der aus der Isolationsabschirmungszusammensetzung hergestellten Isolationsabschirmung nach 2-wöchiger Lagerung bei 100°C im gehärteten Zustand eine Ablösekraft größer als 1,4 kg (3 lbs.) pro 1,3 cm (0,5 Inch) bei 23°C sowie eine anfängliche Ablösekraft nicht größer als 10,9 kg (24 lbs.) pro 1,3 cm (0,5 Inch) bei 23°C verleihen.

13. Verfahren zur Herstellung einer Isolationsabschirmung, die eine Mischung darstellt, bei dem eine Isolationsabschirmungszusammensetzung, die eine Mischung darstellt, radikalisch vernetzt wird und bei dem Folgendes compoundiert wird:
(a) mindestens ein stark verzweigtes kurzkettiges Polymer, das ein Olefin-Homopolymer oder ein Interpolymer von Ethylen und einem oder mehreren Olefinen ist mit der Formel
-(CH₂-CHR)ₓ-(CH₂-CH₂-)_{y}
worin
R eine kurzkettige Alkylzweiggruppe ist, die 1 bis 12 Kohlenstoffatome enthält,
x und y Molprozent sind,
x=50-100,
y = 0 - 50, und
x + y = 100,
und eine mit 250 bis 500 kurzkettigen Zweigen pro 1000 Kohlenstoffen substituierte Hauptkette hat;
(b) mindestens ein ungesättigtes Esterinterpolymer, das ein Polymer von Ethylen und mindestens einem ungesättigten Ester ist, wobei der ungesättigte Ester aus der aus Vinylestern, Acrylsäureestern, Methacrylsäureestern und Mischungen davon bestehenden Gruppe ausgewählt ist, wobei das Estermonomer in einer Menge von 15 bis 50 Gew.-% vorliegt, bezogen auf das Gewicht des ungesättigten Esterinterpolymers; und
(c) mindestens 25 Gew.-% elektrisch leitenden Ruß, bezogen auf das Gewicht des stark verzweigten kurzkettigen Polymers, des ungesättigten Esterinterpolymers und des elektrisch leitenden Rußes,
wobei das stark verzweigte kurzkettige Polymer, das ungesättigte Esterinterpolymer und der elektrisch leitende Ruß in Mengen vorliegen, die der aus der Isolationsabschirmungszusammensetzung hergestellten Isolationsabschirmung nach 2-wöchiger Lagerung bei 100°C im gehärteten Zustand eine Ablösekraft größer als 1,4 kg (3 lbs.) pro 1,3 cm (0,5 Inch) bei 23°C sowie eine anfängliche Ablösekraft nicht größer als 10,9 kg (24 lbs.) pro 1,3 cm (0,5 Inch) bei 23°C verleihen.

14. Verfahren zur Herstellung einer Isolationsabschirmung nach Anspruch 13, wobei die Isolationsabschirmungszusammensetzung reaktiv compoundiert wird.

## Revendications

1. Composition de blindage isolant, qui est un mélange et que l'on peut faire efficacement réticuler par réaction de polymérisation radicalaire, laquelle composition mélange comprend :
a) au moins un polymère à haut degré de ramification et à ramifications à chaînes courtes, qui est un homopolymère d'oléfine ou un interpolymère d'éthylène et d'une ou plusieurs oléfine(s), de formule
-(CH₂-CHR)ₓ-(CH₂-CH₂)_{y}-
dans laquelle R représente un groupe alkyle comportant 1 à 12 atomes de carbone, qui constitue une ramification à chaîne courte, et les
indices x et y sont des valeurs de pourcentage molaire telles que x vaut de 50 à 100, y vaut de 0 à 50 et la somme x+y vaut 100,
et dont le squelette porte de 250 à 500 ramifications à chaînes courtes par millier d'atomes de carbone ;
b) au moins un interpolymère d'ester insaturé, qui est un polymère d'éthylène et d'au moins un ester insaturé, lequel ester insaturé est choisi dans l'ensemble formé par les esters de vinyle, les esters de l'acide acrylique, les esters de l'acide méthacrylique et les mélanges de tels esters, et dans lequel polymère le monomère ester représente de 15 à 50 % du poids de l'interpolymère d'ester insaturé ;
c) et un noir de carbone conducteur ;
et dans laquelle composition le polymère à haut degré de ramification et à ramifications à chaînes courtes, l'interpolymère d'ester insaturé et le noir de carbone conducteur se trouvent en des proportions qui font qu'un blindage isolant fait de cette composition de blindage isolant présente, après deux semaines de stockage à 100 °C et à l'état durci, une résistance au pelage à 23 °C supérieure à 1,4 kg (3 livres) par 1,3 cm (demi-pouce), ainsi qu'une résistance initiale au pelage à 23 °C non supérieure à 10,9 kg (24 livres) par 1,3 cm (demi-pouce).

2. Composition de blindage isolant, conforme à la revendication 1, dans laquelle le polymère à haut degré de ramification et à ramifications à chaînes courtes présente un point de fusion, mesuré par analyse enthalpique différentielle, de 20 à 120 °C.

3. Composition de blindage isolant, conforme à la revendication 1 ou 2, laquelle composition de blindage isolant comprend :
a) de 1 à 75 % en poids de polymère à haut degré de ramification et à ramifications à chaînes courtes,
b) de 40 à 75 % en poids d'interpolymère d'ester insaturé,
c) et de 25 à 45 % en poids de noir de carbone.

4. Composition de blindage isolant, conforme à la revendication 3, dans laquelle le polymère à haut degré de ramification et à ramifications à chaînes courtes se trouve présent en une proportion de 1 à 40 % en poids.

5. Composition de blindage isolant, conforme à la revendication 3, dans laquelle le polymère à haut degré de ramification et à ramifications à chaînes courtes se trouve présent en une proportion de 1 à 20 % en poids.

6. Composition de blindage isolant, conforme à la revendication 3, dans laquelle le polymère à haut degré de ramification et à ramifications à chaînes courtes est un copolymère de type poly(alpha-oléfine).

7. Composition de blindage isolant, conforme à la revendication 1, dans laquelle le polymère à haut degré de ramification et à ramifications à chaînes courtes est un copolymère d'éthylène et de propylène.

8. Composition de blindage isolant, conforme à la revendication 1, 3 ou 6, dans laquelle l'interpolymère d'ester insaturé est un polymère d'éthylène et d'un ester de vinyle.

9. Composition de blindage isolant, conforme à la revendication 1, dans laquelle le polymère à haut degré de ramification et à ramifications à chaînes courtes se trouve présent en une proportion d'au plus 20 % en poids.

10. Composition de blindage isolant, conforme à la revendication 9, laquelle composition de blindage isolant comprend un caoutchouc à base d'acrylonitrile et de butadiène, en une proportion d'au plus 1 % en poids.

11. Composition de blindage isolant, conforme à la revendication 1, dans laquelle le noir de carbone conducteur se trouve présent en une quantité qui représente au moins 25 % du poids total de polymère à haut degré de ramification et à ramifications à chaînes courtes, d'interpolymère d'ester insaturé et de noir de carbone conducteur.

12. Câble d'alimentation électrique comprenant un conducteur, une couche isolante et un blindage isolant, fait d'une composition de blindage isolant qui est un mélange comprenant :
a) au moins un polymère à haut degré de ramification et à ramifications à chaînes courtes, qui est un homopolymère d'oléfine ou un interpolymère d'éthylène et d'une ou plusieurs oléfine(s), de formule
-(CH₂-CHR)ₓ-(CH₂-CH₂)_{y}-
dans laquelle R représente un groupe alkyle comportant 1 à 12 atomes de carbone, qui constitue une ramification à chaîne courte, et les
indices x et y sont des valeurs de pourcentage molaire telles que x vaut de 50 à 100, y vaut de 0 à 50 et la somme x+y vaut 100,
et dont le squelette porte de 250 à 500 ramifications à chaînes courtes par millier d'atomes de carbone ;
b) au moins un interpolymère d'ester insaturé, qui est un polymère d'éthylène et d'au moins un ester insaturé, lequel ester insaturé est choisi dans l'ensemble formé par les esters de vinyle, les esters de l'acide acrylique, les esters de l'acide méthacrylique et les mélanges de tels esters, et dans lequel polymère le monomère ester représente de 15 à 50 % du poids de l'interpolymère d'ester insaturé ;
c) et un noir de carbone conducteur, présent en une quantité qui représente au moins 25 % du poids total de polymère à haut degré de ramification et à ramifications à chaînes courtes, d'interpolymère d'ester insaturé et de noir de carbone conducteur ;
et dans laquelle composition le polymère à haut degré de ramification et à ramifications à chaînes courtes, l'interpolymère d'ester insaturé et le noir de carbone conducteur se trouvent en des proportions qui font qu'un blindage isolant fait de cette composition de blindage isolant présente, après deux semaines de stockage à 100 °C et à l'état durci, une résistance au pelage à 23 °C supérieure à 1,4 kg (3 livres) par 1,3 cm (demi-pouce), ainsi qu'une résistance initiale au pelage à 23 °C non supérieure à 10,9 kg (24 livres) par 1,3 cm (demi-pouce).

13. Procédé de fabrication d'un blindage isolant, qui comporte le fait de faire réticuler par voie radicalaire une composition de blindage isolant qui est un mélange, et qui comporte le fait de mélanger :
a) au moins un polymère à haut degré de ramification et à ramifications à chaînes courtes, qui est un homopolymère d'oléfine ou un interpolymère d'éthylène et d'une ou plusieurs oléfine(s), de formule
-(CH₂-CHR)ₓ-(CH₂-CH₂)_{y}-
dans laquelle R représente un groupe alkyle comportant 1 à 12 atomes de carbone, qui constitue une ramification à chaîne courte, et les
indices x et y sont des valeurs de pourcentage molaire telles que x vaut de 50 à 100, y vaut de 0 à 50 et la somme x+y vaut 100,
et dont le squelette porte de 250 à 500 ramifications à chaînes courtes par millier d'atomes de carbone ;
b) au moins un interpolymère d'ester insaturé, qui est un polymère d'éthylène et d'au moins un ester insaturé, lequel ester insaturé est choisi dans l'ensemble formé par les esters de vinyle, les esters de l'acide acrylique, les esters de l'acide méthacrylique et les mélanges de tels esters, et dans lequel polymère le monomère ester représente de 15 à 50 % du poids de l'interpolymère d'ester insaturé ;
c) et un noir de carbone conducteur, présent en une quantité qui représente au moins 25 % du poids total de polymère à haut degré de ramification et à ramifications à chaînes courtes, d'interpolymère d'ester insaturé et de noir de carbone conducteur ;
et dans laquelle composition le polymère à haut degré de ramification et
à ramifications à chaînes courtes, l'interpolymère d'ester insaturé et le noir de carbone conducteur se trouvent en des proportions qui font qu'un blindage isolant fait de cette composition de blindage isolant présente, après deux semaines de stockage à 100 °C et à l'état durci, une résistance au pelage à 23 °C supérieure à 1,4 kg (3 livres) par 1,3 cm (demi-pouce), ainsi qu'une résistance initiale au pelage à 23 °C non supérieure à 10,9 kg (24 livres) par 1,3 cm (demi-pouce).

14. Procédé de fabrication d'un blindage isolant, conforme à la revendication 13, dans lequel la composition de blindage isolant est préparée par mélangeage réactif.
